# EUROPÄISCHE PATENTANMELDUNG

(11) **EP 1 340 586 A2**
(43) Veröffentlichungstag der Anmeldung: **03.09.2003**
(21) Anmeldenummer: 02027442.9
(22) Anmeldetag: 10.12.2002
(51) Int. Cl.: B23K 26/24, B23K 26/22, F01N 3/28, F01N 7/18

(54) **Verbindungsverfahren für ein mehrschaliges Metallgehäuse**

(30) Priorität: 27.02.2002 DE 10208374
(71) Anmelder: J. Eberspächer GmbH & Co. KG, 73730 Esslingen (DE)
(72) Erfinder: Nording, Thomas, 73734 Esslingen (DE)

(57) **Zusammenfassung**

Die Erfindung betrifft ein Metallgehäuse (1), insbesondere eines Katalysators oder eines Schalldämpfers für eine Abgasanlage einer Brennkraftmaschine. Zwei Schalen (2, 3) weisen jeweils einen nach außen abstehenden Flansch (4, 5) auf, an dem die beiden Schalen (2, 3) aneinander liegen. An den Flanschen (4, 5) sind eine erste Laserschweißnaht (6) sowie eine zweite Laserschweißnaht (13) angebracht, wobei sich die zweite Laserschweißnaht (13) in mehreren vorbestimmten Abschnitte (9, 10, 11, 12) entlang der ersten Laserschweißnaht (6) erstreckt und dort im wesentlichen parallel zur ersten Laserschweißnaht (6) verläuft.

## Beschreibung

Die Erfindung betrifft ein Verfahren zum Verbinden von zwei Schalen eines mehrschaligen Metallgehäuses, insbesondere eines Katalysators oder eines Schalldämpfers für eine Abgasanlage einer Brennkraftmaschine. Die Erfindung betrifft außerdem ein nach dem Verfahren hergestelltes Metallgehäuse.

Insbesondere ein Katalysator oder ein Partikelfilter oder ein Schalldämpfer einer Abgasanlage besitzt ein mehrschaliges, in der Regel zweischaliges Metallgehäuse, bei dem die beiden Schalen miteinander verbunden sind, indem sie im Bereich von Flanschen, an denen die beiden Schalen aneinander liegen, umgefalzt oder gebördelt sind. Die Herstellung einer solchen Falzverbindung oder Bördelverbindung ist nicht bei jeder Flanschgeometrie realisierbar und kann relativ aufwendig sein.

Grundsätzlich ist es auch möglich, die beiden Schalen im Bereich ihrer Flansche mit einer Schweißnaht zu verbinden. Dabei ist ein Auftragsschweißverfahren relativ aufwendig und für eine automatisierte Serienherstellung weniger geeignet. Im Unterschied dazu ist ein Laserschweißverfahren relativ einfach automatisierbar und somit für eine Serienherstellung geeignet. Es hat sich jedoch gezeigt, dass insbesondere bei einem Gehäuse eines Abgasschalldämpfers im bestimmungsgemäßen Gebrauch so hohe Belastungen der Verbindung zwischen den beiden Schalen auftreten, dass eine Laserschweißnaht regelmäßig nicht ausreicht, für das Gehäuse die gewünschte Festigkeit und Lebensdauer zu erzielen.

Die vorliegende Erfindung beschäftigt sich mit dem Problem, für ein mehrschaliges Metallgehäuse eine Möglichkeit aufzuzeigen, die eine dauerhafte und hinreichend belastbare Verbindung zwischen zwei Schalen des Gehäuses gewährleistet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine erste Laserschweißnaht an bevorzugten Stellen oder Abschnitten durch eine parallele zweite Laserschweißnaht lokal zu verstärken. Die Erfindung nutzt dabei die Erkenntnis, dass es zur Erzielung einer hinreichenden Festigkeit der Schweißverbindung nicht erforderlich ist, die gesamte erste Laserschweißnaht doppelt auszuführen, sondern dass es ausreicht, ausgewählte Bereiche der ersten Laserschweißnaht durch die zweite Laserschweißnaht zu verdoppeln. Diese Vorgehensweise ermöglicht es, die Kosten für die Herstellung der beiden Laserschweißnähte relativ niedrig zu halten; jedenfalls ist die erfindungsgemäße Schweißverbindung erheblich preiswerter als zwei vollständige Laserschweißnähte.

Entsprechend einer bevorzugten Ausführungsform werden für die Anbringung der zweiten Laserschweißnaht diejenigen Abschnitte der ersten Laserschweißnaht ausgewählt, in deren Bereich beim bestimmungsgemäßen Gebrauch des Gehäuses höhere Belastungen auftreten als im Bereich der übrigen ersten Laserschweißnaht. Beispielsweise werden durch Berechnungen oder Versuche die Schwachstellen einer Schweißverbindung mit nur einer einzigen Laserschweißnaht lokalisiert. Bei der Herstellung des Serienprodukts können dann diese lokalen Schwachstellen der ersten Laserschweißnaht durch die lokale Verdopplung mittels der zweiten Laserschweißnaht verstärkt werden. Durch diese Vorgehensweise wird der Aufwand für die Anbringung der zweiten Laserschweißnaht minimiert, so dass die zusätzlichen Kosten für die zweite Laserschweißnaht relativ gering sind.

Es hat sich gezeigt, dass bei bestimmten Anwendungsformen die Länge der zweiten Laserschweißnaht weniger als 30%, insbesondere weniger als 10%, der Länge der ersten Laserschweißnaht betragen kann, um eine hinreichende Verstärkung zu erzielen. Da die zweite Laserschweißnaht somit erheblich kürzer ist als die erste Laserschweißnaht, sind die zur Herstellung der zweiten Laserschweißnaht erforderlichen Kosten relativ gering.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine Draufsicht auf ein Gehäuse nach Erfindung,
- Fig. 2: eine Schnittansicht durch das Gehäuse entsprechend den Schnittlinien II in Fig. 1 im Bereich einer Schweißverbindung.

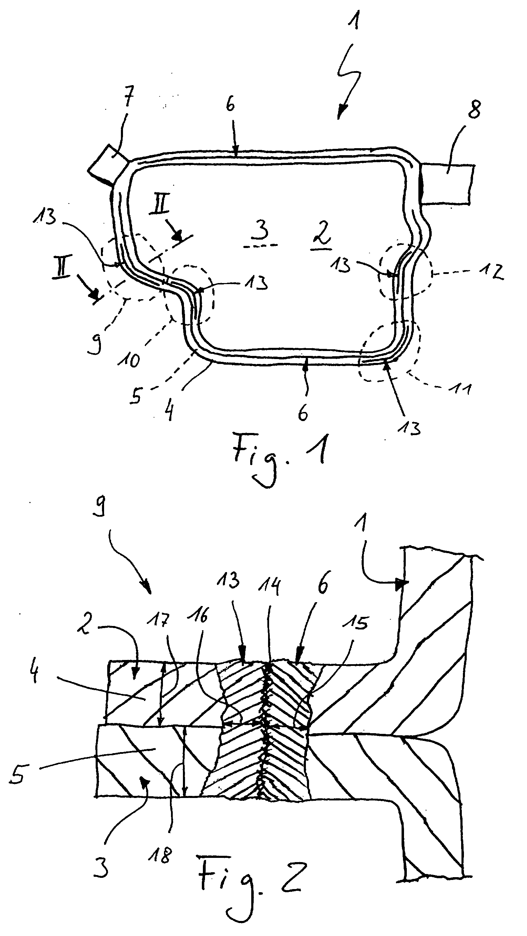

In Fig. 1 ist ein Gehäuse 1 dargestellt, das mehrschalig ausgebildet ist und aus Blech bzw. aus Metall besteht. Beispielsweise handelt es sich bei diesem Gehäuse 1 um das Gehäuse 1 eines Schalldämpfers für eine Abgasanlage einer Brennkraftmaschine, insbesondere eines Kraftfahrzeugs. Ebenso kann das Gehäuse 1 zur Aufnahme eines Katalysators oder eines Partikelfilters dienen und ebenfalls für eine Abgasanlage einer Brennkraftmaschine vorgesehen sein. Das Gehäuse 1 ist im bestimmungsgemäßen Gebrauch hohen thermischen Belastungen ausgesetzt; darüber hinaus können relativ hohe Drükke auftreten. Desweiteren ist das Gehäuse auch durch Schwingungen und Vibrationen der Abgasanlage hohen Belastungen ausgesetzt.

Das Gehäuse 1 besitzt im vorliegenden Fall zwei Schalen 2 und 3, die hier deckungsgleiche Konturen besitzen, so dass in der Draufsicht gemäß Fig. 1 nur die dem Betrachter zugewandte erste Schale 2 erkennbar ist. Beide Schalen 2, 3 besitzen jeweils einen am Schalenrand nach außen abstehenden Flansch 4 bzw. 5 in Form eines im wesentlichen vollständig umlaufenden Kragens. An ihren Flanschen 4, 5 liegen die beiden Schalen 2, 3 deckungsgleich aneinander. Im Bereich ihrer Flansche 4, 5 sind die beiden Schalen 2, 3 aneinander befestigt.

Die Verbindung zwischen den beiden Schalen 2,3 erfolgt im Bereich der Flansche 4,5 im wesentlichen mittels einer ersten Laserschweißnaht 6, die im vorliegenden Fall als kontinuierliche Schweißnaht ausgebildet ist und lediglich im Bereich von Anschlußstutzen 7 bzw. 8 unterbrochen ist. Diese erste Laserschweißnaht 6 besitzt vorbestimmte Abschnitte 9,10,11 und 12, die in Fig. 1 durch eine unterbrochene Linie eingefaßt sind. Im Bereich dieser Abschnitte 9, 10, 11, 12 treten im Gebrauch des Gehäuses 1 die größten Belastungen der Verbindung zwischen den beiden Schalen 2, 3 auf. Insbesondere sind die in den Abschnitten 9, 10, 11, 12 auftretenden Belastungen größer als in den übrigen Bereichen der ersten Laserschweißnaht 6. Die Abschnitte 9, 10, 11, 12 können beispielsweise durch Berechnungen ermittelt und durch Versuche verifiziert werden. Es ist klar, dass auch mehr oder weniger als vier solche Abschnitte 9, 10, 11, 12 vorhanden sein können.

Erfindungsgemäß ist die erste Laserschweißnaht 6 im Bereich dieser vorbestimmten Abschnitte 9, 10, 11, 12 jeweils durch eine zweite Laserschweißnaht 13 verstärkt. Dabei erstreckt sich diese zweite Laserschweißnaht 13 innerhalb des jeweiligen Abschnitts 9, 10, 11, 12 jeweils entlang der ersten Laserschweißnaht 6 und verläuft dabei im wesentlichen parallel zur ersten Laserschweißnaht 6. Die zusätzliche Anbringung dieser lokalen zweiten Laserschweißnaht 13 bedeutet für eine rechnergestützte Schweißanlage nur einen relativ geringen zusätzlichen Aufwand, so dass die Zusatzkosten für die auf die Abschnitte 9, 10, 11, 12 begrenzte zweite Laserschweißnaht 13 relativ klein sind.

Wie aus Fig. 1 hervorgeht, erstreckt sich die erste Laserschweißnaht 6 entlang des gesamten Bereichs, in dem die Flansche 4, 5 aneinander liegen; lediglich im Bereich der Anschlussstutzen 7 und 8 ist die erste Laserschweißnaht 6 zwangsläufig unterbrochen. Die erste Laserschweißnaht 6 ist vorzugsweise als kontinuierliche Schweißnaht ausgebildet, um eine hinreichende Gasdichtigkeit des Gehäuses 1 gewährleisten zu können. Bei der hier gezeigten Ausführungsform ist auch die zweite Laserschweißnaht 13 jeweils innerhalb des zugeordneten Abschnitts 9, 10, 11, 12 als kontinuierliche Schweißnaht ausgebildet. Ebenso kann es zweckmäßig sein, die zweite Laserschweißnaht 13 als diskontinuierliche oder als gepunktete Schweißnaht auszubilden. Je nach den vorhandenen Platzverhältnissen und je nach Art der auftretenden Belastungen kann es zweckmäßig sein, die zweite Laserschweißnaht 13 auf der dem freien Außenrand der Flansche 4, 5 zugewandten Außenseite (wie in den Abschnitten 9 und 11) oder auf der vom freien Außenrand der Flansche 4, 5 abgewandten Innenseite (wie in den Abschnitten 10 und 12) der ersten Laserschweißnaht 6 anzubringen.

Aus Fig. 1 geht außerdem deutlich hervor, dass die Gesamtlänge der zweiten Laserschweißnaht 13 erheblich kürzer ist als die Gesamtlänge der ersten Laserschweißnaht 6. Zweckmäßig beträgt die Länge der zweiten Laserschweißnaht 13 nur etwa 10% bis 30% der Länge der ersten Laserschweißnaht 6; ebenso kann die Länge der zweiten Laserschweißnaht 13 auch weniger als 10% der Länge der ersten Laserschweißnaht 6 betragen.

Entsprechend Fig. 2 kann die zweite Laserschweißnaht 13 so an den Flanschen 4,5 ausgebildet werden, dass sie direkt an die erste Schweißnaht 6 angrenzt. Dabei können die beiden Laserschweißnähte 6 und 13 durchaus auch so dicht aneinander grenzen, dass sie teilweise ineinander übergehen. Eine derartige Übergangszone oder Fusionszone ist in Fig. 2 mit 14 bezeichnet. Es ist klar, dass die beiden Schweißnähte 6 und 13 auch so angebracht werden können, dass sie relativ dicht beieinander, jedoch beabstandet zueinander verlaufen.

Von besonderer Bedeutung ist hier, dass sowohl eine Breite 15 der ersten Laserschweißnaht 6 als auch eine Breite 16 der zweiten Laserschweißnaht 13 jeweils kleiner ist als eine Wandstärke 17 des Flansches 4 der ersten Schale 2 und als eine Wandstärke 18 des Flansches 5 der zweiten Schale 3. Beispielsweise betragen die Breiten 15, 16 der Laserschweißnähte 6, 13 jeweils nur etwa 60% bis 80% der Wandstärken 17, 18 der Flansche 4, 5.

In den bevorzugten Abschnitten 9, 10, 11, 12 ergibt sich durch die dort lokale vorgesehene zweite Laserschweißnaht 13 für die an den Flanschen 4, 5 ausgebildete Schweißverbindung somit eine resultierende Schweißnahtbreite, die sich aus den Breiten 15, 16 der beiden Schweißnähte 6, 13 zusammensetzt. Bei der in Fig. 2 gezeigten, bevorzugten Ausführungsform sind die Breite 15 der ersten Laserschweißnaht 6 und die Breite 16 der zweiten Laserschweißnaht 13 zusammen größer als die Wandstärke 17 des einen Flansches 4 und größer als die Wandststärke 18 des anderen Flansches 5. Insbesondere ergibt sich durch die direkt aneinander angrenzenden Schweißnähte 6, 13 im Bereich der Abschnitte 9, 10, 11, 12 eine doppelte Schweißnaht bzw. eine Schweißnaht mit doppelter Breite.

Beim Verbinden der beiden Schalen 2 und 3 kann zweckmäßig so vorgegangen werden, dass zunächst die beiden Schalen 2 und 3 so aneinander angelegt werden, dass sie an ihren Flanschen 4, 5 aneinander liegen. Anschließend kann die erste Laserschweißnaht 6 angebracht werden. Unmittelbar daran anschließend kann in den ausgewählten Abschnitten 9, 10, 11, 12 die zweite Laserschweißnaht 13 ausgebildet werden. Das Schweißverfahren kann beispielsweise mittels eines rechnergestützten Schweißautomaten durchgeführt werden, wodurch sich die serienmäßige Herstellung des Gehäuses 1 vereinfacht.

## Patentansprüche

1. Verfahren zum Verbinden von zwei Schalen (2, 3) eines mehrschaligen Metallgehäuses (1), insbesondere eines Katalysators oder eines Schalldämpfers für eine Abgasanlage einer Brennkraftmaschine, mit folgenden Schritten:
A: Aneinanderlegen der Schalen (2, 3), so dass die Schalen (2, 3) an nach außen abstehenden Flanschen (4, 5) aneinanderliegen,
B: Anbringen einer ersten Laserschweißnaht (6) an den Flanschen (4, 5),
C: Anbringen einer zweiten Laserschweißnaht (13) an den Flanschen (4, 5), die sich entlang wenigstens eines vorbestimmten Abschnitts (9, 10, 11, 12) der ersten Laserschweißnaht (6) erstreckt und dort im wesentlichen parallel zur ersten Laserschweißnaht (6) verläuft.

2. Verfahren nach Anspruch 1,
**dadurch gekennzeichnet, dass** die zweite Laserschweißnaht (13) unmittelbar an die erste Schweißnaht (6) angrenzt.

3. Verfahren nach Anspruch 1 oder 2,
**dadurch gekennzeichnet, dass** die zweite Laserschweißnaht (13) und die erste Laserschweißnaht (6) so dicht aneinander grenzen, dass sie ineinander übergehen.

4. Verfahren nach Anspruch 1,
**dadurch gekennzeichnet, dass** die zweite Laserschweißnaht (13) beabstandet zur ersten Laserschweißnaht (6) verläuft.

5. Verfahren nach einem der Ansprüche 1 bis 4,
**dadurch gekennzeichnet, dass** die Verbindung zwischen den Schalen (2, 3) beim bestimmungsgemäßen Gebrauch des Gehäuses (1) im Bereich des wenigstens einen vorbestimmten Abschnitts (9, 10, 11, 12) der ersten Laserschweißnaht (6) höheren Belastungen ausgesetzt ist als im Bereich der übrigen ersten Laserschweißnaht (6).

6. Verfahren nach einem der Ansprüche 1 bis 5,
**dadurch gekennzeichnet, dass** der wenigstens eine vorbestimmte Abschnitt (9, 10, 11, 12) der ersten Laserschweißnaht (6) empirisch und/oder rechnerisch ermittelt ist.

7. Verfahren nach einem der Ansprüche 1 bis 6,
**dadurch gekennzeichnet, dass** die Breite (15) der ersten Laserschweißnaht (6) und die Breite (16) der zweiten Laserschweißnaht (13) jeweils kleiner ist als die Wandstärke (17, 18) jedes Flansches (4, 5).

8. Verfahren nach Anspruch 7,
**dadurch gekennzeichnet, dass** die Breite (15) der ersten Laserschweißnaht (6) und die Breite (16) der zweiten Laserschweißnaht (13) etwa das 0,6-fache bis 0,8-fache der Wandstärke (17, 18) jedes Flansches (4, 5) ist.

9. Verfahren nach Anspruch 7 oder 8,
**dadurch gekennzeichnet, dass** die Breite (15) der ersten Laserschweißnaht (6) und die Breite (16) der zweiten Laserschweißnaht (13) zusammen größer sind als die Wandstärke (17, 18) jedes Flansches (4, 5).

10. Verfahren nach einem der Ansprüche 1 bis 9,
**dadurch gekennzeichnet, dass** sich die erste Laserschweißnaht (6) im wesentlichen entlang des gesamten Bereichs erstreckt, in dem die Flansche (4, 5) aneinanderliegen.

11. Verfahren nach einem der Ansprüche 1 bis 10,
**dadurch gekennzeichnet, dass** die erste Laserschweißnaht (6) als kontinuierliche oder diskontinuierliche oder gepunktete Schweißnaht ausgebildet ist.

12. Verfahren nach einem der Ansprüche 1 bis 11,
**dadurch gekennzeichnet, dass** die zweite Laserschweißnaht (13) als kontinuierliche oder diskontinuierliche oder gepunktete Schweißnaht ausgebildet ist.

13. Verfahren nach einem der Ansprüche 1 bis 12,
**dadurch gekennzeichnet, dass** die Länge der zweiten Laserschweißnaht (13) etwa 10% bis 30% oder weniger der Länge der ersten Laserschweißnaht (6) beträgt.

14. Mehrschaliges Metallgehäuse, insbesondere eines Katalysators oder eines Schalldämpfers für eine Abgasanlage einer Brennkraftmaschine,
- mit wenigstens zwei Schalen (2, 3), die jeweils einen nach außen abstehenden Flansch (4, 5) aufweisen, an dem die beiden Schalen (2, 3) aneinanderliegen,
- wobei an den Flanschen (4, 5) eine erste Laserschweißnaht (6) angebracht ist,
- wobei an den Flanschen (4, 5) eine zweite Laserschweißnaht (13) angebracht ist, die sich entlang wenigstens eines vorbestimmten Abschnitts (9, 10, 11, 12) der ersten Laserschweißnaht (6) erstreckt und dort im wesentlichen parallel zur ersten Laserschweißnaht (6) verläuft.

15. Metallgehäuse nach Anspruch 14 **gekennzeichnet durch** die kennzeichnenden Merkmale wenigstens eines der Ansprüche 2 bis 13.
